(19) Europäisches Patentamt
European Patent Office
Office européen des brevets

(11) Publication number: 0 142 973
A2

# (12) EUROPEAN PATENT APPLICATION

(21) Application number: 84307822.1

(22) Date of filing: 12.11.84

(51) Int. Cl.4: B 01 D 13/04

(30) Priority: 23.11.83 GB 8331195

(43) Date of publication of application: 29.05.85 Bulletin 85/22

(84) Designated Contracting States: AT BE CH DE FR GB IT LI LU NL SE

(71) Applicant: IMPERIAL CHEMICAL INDUSTRIES PLC
Imperial Chemical House Millbank
London SW1P 3JF(GB)

(72) Inventor: Hann, Richard Anthony
5, Marling Close
Frodsham Cheshire WA6 6AY(GB)

(72) Inventor: Holmes, David Robert
50, Weaver Road
Frodsham Cheshire(GB)

(72) Inventor: Smith, John William
17, Avon Close
Walton Liverpool L4 1XL(GB)

(74) Representative: James, David Gomer et al,
Imperial Chemical Industries PLC Legal Department: Patents Po Box 6
Welwyn Garden City Herts, AL7 1HD(GB)

## (54) Membranes.

(57) Solutions of sulphonated polyarylethersulphones in a solvent mixture of at least three liquids which are non-solvents or poor solvents for the polymer, can be used to produce asymmetric semipermeable membranes. The polymer may be a copolymer of

$$-\!\!\left[ Ph^1 - O - Ph^2 - O - Ph^1 - SO_2 \right]\!\!-$$

and

$$-\!\!\left[ Ph^1 - O_2 - Ph^1 - SO_2 - Ph^1 - O - Ph^2 - SO_2 \right]\!\!-$$

wherein $Ph^1$ and $Ph^2$ are respectively unsulphonated and sulphonated phenylene residues. The components of the solvent mixture have specified solubility parameters. Suitable solvent mixtures include water, 1,4 -dioxane and acetonitrile and also methanol, chloroform and nitromethane.



Croydon Printing Company Ltd.

Membranes

This invention relates to membranes and more particularly to a method for the preparation of asymmetric semi-permeable membranes of sulphonated polyarylethersulphones.

Membranes which are useful in separation processes such as ultrafiltration and reverse osmosis may be prepared from polymeric materials. Asymmetric semi-permeable membranes, which can be used for reverse-osmosis, can be prepared by casting a solution of a film-forming ion-exchange material on a support and then coagulating the film using a non-solvent for the ion-exchange material. Asymmetric semi-permeable membranes are characterised by having a thin dense layer which functions as the active layer of the membrane and a thicker porous layer which functions as a reinforcing support for the active layer.

British Patent Specification No 1258851 discloses sulphonated polyarylethersulphones having a specified structure. These materials are disclosed as being ion exchange resins and as being suitable for the production of membranes for a number of applications including electrodialysis, fuel cell applications, osmosis and reverse osmosis. European Patent Specification No 8894 discloses alternative sulphonated polyarylethersulphones which may be prepared by a simple and readily controlled sulphonation technique and these materials also may be used to produce membranes for desalination and other processes.

For the preparation of a solution of a sulphonated polyarylether for example a sulphonated polyarylethersulphone, various known solvents for the polymer have been proposed, especially aprotic polar solvents such as dimethylformamide and dimethylsulphoxide. Whilst such solvents can be used singly, it is desirable for the casting solution to contain a mixture of solvents and/or swelling agents and also a non-solvent for the polymer, for example water, to facilitate coagulation of the polymer film and formation of the aforementioned asymmetric structure.

It has now been found that membranes having a useful combination of flux and salt rejection properties may be obtained from solutions of specific sulphonated polyarylethersulphones in a solvent

containing specified components.

Accordingly, one aspect of the invention provides a solution of a sulphonated polyarylethersulphone in a solvent mixture, wherein the sulphonated polyarylethersulphone has repeating units of the formula I

$$\text{I} \quad -\!\left[\left(\text{Ph} - \text{O}\right)_n - \text{Ph} - \text{SO}_2\right]\!-$$

and the solvent mixture contains at least three components each of which is a non-solvent or poor solvent for the sulphonated polyarylethersulphone and which are

a) a liquid or a low melting solid containing at least one hydroxylic group and having a delta-H with a value of at least 8;

b) a liquid or a low melting solid having a delta-D with a value of at least 8 and a delta-P with a value of not more than 3; and

c) a liquid or a low melting solid having a delta-P with a value of at least 8.5 and a delta-H with a value of not more than 3; wherein

Ph represents a phenylene residue, preferably a para-phenylene residue, wherein at least some of the groups Ph are sulphonated;

n is 1 or 2 and the value of n can differ along the polymer chain; the solvent mixture forms a single liquid phase and none of the components of the solvent mixture reacts or complexes with another of the components of the solvent mixture or with the sulphonated polyarylethersulphone.

For convenience hereafter, the sulphonated polyarylethersulphone will be referred to as the "sulphonated polysulphone".

By "low melting solid" is meant a material which is solid at ambient temperature and has a melting point of not more than 50°C.

Delta-H, delta-D and delta-P are components of the solubility parameter of each material which is a component of the solvent mixture and are related by the expression

$$(\text{delta-O})^2 = (\text{delta-H})^2 + (\text{delta-D})^2 + (\text{delta-P})^2$$

where delta-O is the solubility parameter and is given by the expression

$$(\text{delta-O}) = \left(\frac{\Delta E_v}{V}\right)^{\frac{1}{2}}$$

where

$\Delta E_v$ is the molar cohesive energy which approximates to $\Delta H - RT$;

$\Delta H$ is the latent heat of vaporisation;

R is the gas constant;

T is the absolute temperature; and

V is the molar volume.

More specifically, delta-H is the hydrogen bonding component of the solubility parameter, delta-D is the dispersion component of the solubility parameter and delta-P is the polar component of the solubility parameter.

The concept of solubility parameters is discussed in many papers in the scientific literature including, inter alia, a paper by C M Hansen in Ind Eng Chem Prod Res Dev 8 March 1969, pages 2 to 11. Other papers in which solubility parameters are considered are, inter alia, Chemical Reviews, 75 (1975), pages 731 to 753, and Kirk-Othmer "Encyclopedia of Chemical Technology" Second Edition, Supplemental Volume (1971) pages 889 to 910.

A tablulation of values of delta-H, delta-D and delta-P is given in the Hansen paper and these may be used to determine suitable materials for use as components (a), (b) and (c) of the solvent mixture.

Preferred materials for use as component (a) of the solvent mixture have a delta-H of at least 8,a delta-D of not more than 8 and a delta-P of at least 6. Especially preferred materials have a delta-H of greater than 10, a delta-D of less than 8 and a delta-P of at least 6. From the Hansen paper, few materials have a delta-H of the required value and only diethylene glycol, dipropylene glycol, methanol and water satisfy the requirements for the preferred materials.

Preferred materials for use as component (b) of the solvent mixture have a delta-D with a value of at least 8, a delta-P of not more than 3 and a delta-H of not more than 4. Materials satisfying the preferred requirements include, inter alia, 1,4-dioxane, anisole, carbon tetrachloride, chloroform and methylene chloride. Furan and tetrahydrofuran have the preferred values of delta-D, delta-P and delta-H but are excluded due to the tendency of these materials to complex with the sulphonated polysulphone. Many hydrocarbons, particularly cyclic hydrocarbons, have the preferred values of delta-D, delta-P and delta-H but do not form a single phase mixture with most

materials used as components (a) and (c) of the solvent mixture.

Preferred materials for use as component (c) of the solvent mixture have a delta-P of at least 8.5, a delta-H of not more than 3 and a delta-D of at least 7.5. Materials satisfying the preferred requirements include, inter alia, propylene carbonate, ethylene carbonate, acetonitrile and nitromethane.

The components of the solvent mixture are non-solvents or poor solvents for the sulphonated polysulphone and the polymer is typically soluble in each of the components in an amount of not more than 5% by weight, preferably less than 1% by weight, especially less than 0.1% by weight.

The sulphonated polysulphone is preferably soluble in the solvent mixture in an amount of at least 10% by weight, more preferably at least 15% by weight, especially at least 20% by weight, for example 25 to 30% by weight. The quantity of polymer dissolved in the solvent mixture should be such that the resulting solution can be cast into a membrane and this will be dependent not only on the components of the solvent mixture but also on the molecular weight of the polymer and the degree of sulphonation of the polymer.

As is discussed in more detail hereafter, the solutions of the present invention can be used for the production of membranes.

Thus, according to a further aspect of the invention, there is provided a method for the production of an asymetric semi-permeable membrane which method comprises forming a solution of a sulphonated polyarylethersulphone in a solvent mixture, casting the film in a coagulating bath and recovering a membrane, wherein the solution of the sulphonated polyarylethersulphone in the solvent mixture is as hereinbefore described.

Whilst the sulphonated polysulphone may be one in which the value of n is only one or is only two, we prefer to use a copolymer in which the value of n is one for some repeat units and is two for other repeat units.

The sulphonated polysulphone may be the sulphonated copolymer of European Patent Specification No 8894, which is a material having repeat units of the formula:-

$$\text{II} \qquad -\!\left( Ph^1 - O - Ph^2 - O - Ph^1 - SO_2 \right)\!-$$

together with the repeat units of the formula

$$\text{III} \qquad \left( Ph^1 - O - Ph^1 - SO_2 - Ph^1 - O - Ph^1 - SO_2 \right)$$

wherein

$Ph^1$ represents a phenylene residue, preferably a para-phenylene residue;

$Ph^2$ represents a phenylene residue, preferably a para-phenylene residue, having one or two groups $-SO_3M$;.

M is a hydrogen atom, a metal atom and/or a group $NR_4$, wherein the groups M may be the same or different and the proportion of the groups M is sufficient to combine with the unsatisfied valencies of the group $-SO_3$; and

R is an alkyl group.

The sulphonated polysulphone may also include a proportion of unsulphonated copolymer having repeat units of the formula

$$\text{IV} \qquad \left( Ph^1 - O - Ph^1 - O - Ph^1 - SO_2 \right)$$

together with the repeat units of the formula III, wherein $Ph^1$ is as defined.

In the repeat units of the formula II, when $Ph^2$ is an ortho- or para- phenylene residue, there is typically only one group $-SO_3M$ whereas when $Ph^2$ is a meta-phenylene residue there are typically two groups $-SO_3M$. When $Ph^2$ is an ortho-phenylene residue, the $-SO_3M$ group is located in a position which is para- to one ether group and meta- to the other ether group, any further sulphonation occurring to locate the $-SO_3M$ in positions meta- to each other. When $Ph^2$ is an ortho-phenylene residue, the $-SO_3M$ group is located in a position ortho- to one ether group and meta- to the other ether group. When $Ph^2$ is a meta-phenylene residue, the $-SO_3M$ groups are located in the position ortho- to one ether group and para- to the other ether group.

As is described in European Patent Specification No 8894, the sulphonated copolymers may be prepared by sulphonating a copolymer consisting of repeat units III and IV. The sulphonation is readily effected by dissolving the copolymer in concentrated sulphuric acid (98% w/w) at ambient temperature and agitating the mixture for a sufficient time for sulphonation of essentially all of the sub-units

- O - $Ph^1$ - O - in the repeat units of formula IV. The copolymers which are subjected to sulphonation suitably have from 1 to 99 mole % of units IV and correspondingly from 99 to 1 mole % of units III, and especially from 5 to 80 mole % of units IV and correspondingly from 95 to 20 mole % of units III. Sulphonation is desirably effected to convert at least 90% of the units IV to the units II.

The sulphonated polysulphones are polymeric materials of high molecular weight such that the reduced viscosity (RV) of the polymer, (measured as a 1% by weight solution of the polymer in dimethylformamide at 25°C) is at least 0.2 and preferably at least 0.4. The polymer may be such as to give an RV of up to 2.5, but it is generally preferred that the RV of the polymer does not exceed 2.0.

The copolymer which is to be sulphonated is conveniently prepared using a mixture of monomers to produce the desired repeat units III and IV and hence the units III and IV are distributed in a random fashion along the polymer chain. Hence, in the sulphonated copolymer, the units II (and IV) and III are also distributed in a random fasion along the polymer chain.

The sulphonated polysulphone contains the groups $-SO_3M$, where M may be hydrogen, a metal atom or a group $NR_4$. Sulphonated polysulphones in which M is a divalent metal atom, particularly an alkaline earth metal, are the subject of our copending British Patent Application No 8331198 filed on 23 November 1983, which also discloses a method for the production of such divalent metal salts and the use thereof for the production of asymmetric semi-permeable membranes.

The components of the solvent mixture, and the properties thereof, are preferably such that the solvent mixture has a delta-H of value in the range from 3 to 6; a delta-P of value in the range from 4 to 8 and a delta-D of value in the range from 7.5 to 9. We have found that the preferred values of delta-H, delta-P and delta-D are dependent on the nature of the sulphonated polysulphone and when a divalent metal salt is being used, the value of delta-H is in a more limited range, specifically from 4.5 to 5.5.

Solvent mixtures which may be used in accordance with the present invention include the systems 1, 2, and 3. System 1 is

1a) $R^1OH$ or $R^1COOH$, where $R^1$ is a hydrogen atom or a hydrocarbyl group;

1b) an ether, particularly a cyclic ether; and

1c) a non-basic nitrogen - containing compound.

System 2 is

2a) $R^1OH$ or $R^1COOH$, where $R^1$ is as defined;

2b) an ether, particularly a cyclic ether; and

2c) an alkylene carbonate.

System 3 is

3a) $R^1OH$ or $R^1COOH$, where $R^1$ is as defined;

3b) a halohydrocarbon compound; and

3c) a non-basic nitrogen - containing compound

As an example of system 1 there may be mentioned water, 1,4 - dioxane and acetonitrile. As an example of system 2 there may be mentioned water, 1,4 - dioxane and propylene carbonate. As an example of system 3 there may be mentioned methanol, chloroform and nitromethane.

The solvent mixtures consisting of water, 1,4 - dioxane and acetonitrile or of methanol, chloroform and nitromethane have been used to produce membranes from sulphonated polysulphones in which M is a hydrogen atom. As is described in more detail in copending British Patent Application No 8331198, the solvent mixture water, 1,4 - dioxane and propylene carbonate is suitable for the formation of solutions of sulphonated polysulphones in which M is a divalent metal atom, and for the production of membranes from such solutions.

In the materials of the type $R^1OH$ and $R^1COOH$, it is preferred that $R^1$ is a lower alkyl group, that is one containing 1 to 6 carbon atoms, or is especially hydrogen.

It is preferred that at least one component of the solvent mixture is volatile and at least partially evaporates under the conditions of casting the solution. Preferably, the remaining components of the solvent mixture are such, and are present in such proportions, that evaporation of some or all of the volatile component causes the sulphonated polysulphone to become insoluble in the residue of the solvent mixture.

As is discussed herein, a wide range of solvent mixtures can be used. For sulphonated polysulphones as disclosed in European Patent Publication 8894, we have obtained a solvent mixture having satisfactory characteristics from a mixture consisting of acetonitrile, 1,4-dioxane and water which contains at least 10% by weight of acetonitrile, at least 20% by weight of dioxane and not more than 30% by weight of water, the total amounts of three components aggregating to 100% by weight. We particularly prefer that the mixture contains 10 to 25% by weight of water, 10 to 50% by weight of acetonitrile and 25 to 66% by weight of dioxane, the total amounts of the three components aggregating to 100% by weight.

The most suitable mixtures for any particular sulphonated polysulphone depend not only on the basic polymer structure, that is the unsulphonated material, but also upon the sulphonation ratio of the polymer. By "sulphonation ratio" we mean the ratio of the number of sulphonated phenylene residues in the sulphonated polymer to the number of unsulphonated phenylene residues in the sulphonated polymer. The sulphonation ratio can be determined by titration. In general, polymers having lower sulphonation ratios require solvent mixtures in which the value of delta-H and delta-P for the solvent mixture is reduced. For the solvent mixture acetonitrile, 1,4-dioxane, and water, this is achieved with a mixture having a lower water content and a higher acetonitrile content. The most suitable mixtures for any given sulphonated polymer can be readily ascertained by trial. Thus, we have found that with a sulphonated polysulphone containing units II and III, as specified herein, which is essentially free of the units IV and in which the proportion of units II is such as to give a sulphonation ratio of 1:5, the preferred mixture consists of 1,4-dioxane, acetonitrile and water in the weight ratios of 3:1:1. However, with a similar polymer containing a lower proportion of units II which is fully sulphonated to give a sulphonation ratio of 1:10, the preferred mixture consists of 1,4-dioxane, acetonitrile and water in the weight ratios of 4:5:1.

Using the solvent mixture methanol, chloroform and nitromethane and a polymer containing only units II and III, which has a sulphonation ratio of 1:8, the preferred solvent mixture consists of chloroform, methanol and nitromethane in the weight ratios of 3:2:2.

The solution may be prepared by dissolving the sulphonated polysulphone in any suitable form, for example powder, chips, granules, in the mixed solvent to form a solution containing from 10% to 40% by weight of the sulphonated polysulphone.

Dissolution of the polymer and casting on the the support may be effected at ambient temperature but low or higher temperatures may be used if desired, for example 0°C to 100°C.

The solution of the sulphonated polysulphone in the solvent mixture may include a swelling agent. A wide range of materials may be used as the swelling agent and these are typically water soluble compounds, especially bifunctional carboxylic acids. Maleic acid is a suitable swelling agent. The amount of the swelling agent is dependent on the particular swelling agent, the sulphonated polysulphone and the solvent mixture but generally will be at least 1% by weight of the total composition (swelling agent, sulphonated polysulphone and solvent mixture) and will not usually exceed 10% by weight of the total composition.

The solution of the sulphonated polysulphone is formed into a membrane by casting on a support. Casting onto the support may be effected at essentially ambient temperature but lower or higher temperatures may be used if desired. The support may be, for example, a non-porous plane surface such as a glass or metal plate or, alternatively, may be a porous support such as a fabric and, where appropriate, it may have some other shape. Sufficient of the solution is cast on to the support in conventional manner to give a film of the desired thickness which may be adjusted as necessary by suitable mechanical means. It is preferred to produce a film having a thickness of at least 20 micrometres and not more than 300 micrometres, most preferably from 50 up to 250 micrometres, and especially from 75 to 200 micrometres. Alternatively, fine hollow fibres may be produced by extruding the solution through a die having a central mandrel, allowing some of the solvent to evaporate and then passing the fibres through a coagulation bath.

It is advantageous to allow at least partial evaporation of at least one component of the solvent mixture from the supported liquid film by exposing the latter to the atmosphere for a short time, 10 seconds to 5 minutes, before immersing the supported film in a

coagulation bath. The coagulation bath may contain an aqueous solution, for example a solution of an inorganic salt such as sodium chloride or sodium nitrate, or may be a non-solvent liquid, or liquid mixture, for example formed from one or more of the components of the solvent mixture. Preferably, the coagulation bath is an aqueous solution of a metal salt such as sodium chloride or sodium nitrate. To obtain a membrane of a higher flux, the coagulation bath may be a mixture of water and either component (b) or component (c) of the solvent mixture used in casting the membrane. The temperature of the coagulation bath is generally between -20°C and 60°C, and is preferably below 5°C. The coagulation treatment may be between 1 minute and and several hours, for example between 5 and 60 minutes.

After the coagulation treatment the membrane is recovered. In the case of a non-porous support, the membrane is detached from the support but, in the case of a porous support, the membrane remains adhered to the support. The recovered membrane may be subjected to heat treatment in order to relax the structure. Such a heat treatment preferably includes an immersion in an aqueous solution of an inorganic salt at an elevated temperature, typically from 70°C to 150°C. This heat treatment may be effected with the membrane being held under pressure (4 to 100 $KN/m^2$) between porous supports, such as porous graphite, sintered stainless steel or filter paper on a non-porous support. Once prepared, and after any heat treatment, the membrane is preferably washed with distilled water to remove free ionic species and is then stored in distilled water until required.

Membranes obtained by the method of the invention may be used for the treatment of a wide variety of aqueous or non-aqueous solutions or suspensions by conventional reverse osmosis or ultrafiltraion techniques. In particular they may be used for the desalination of sea water and for the purification of brackish waters and industrial effluents.

To reduce the possibility of variations in membrane properties, it is desirable that all stages in the preparation of the casting solution, and the casting and coagulation steps, are effected under carefully controlled conditions of time, temperature and humidity. During the casting and subsequent evaporation, it is preferred that the humidity does not exceed about 65% relative humidity, for example in the range 35 to 50% relative humidity.

The accompanying drawing is a diagrammatic representation of a reverse osmosis cell in which the membranes of the present invention may be used.

The cell comprises a closed vessel 1 which is divided into two sections internally by a membrane 2. The membrane 2 is in contact with a sheet 3 of a porous material, for example filter paper, and sheet 3 is supported by a porous plate 4 which is not semi-permeable and which assists in preventing mechanical deformation of the membrane 2. The membrane 2, the sheet 3 and porous plate 4 are clamped at their edges to prevent leaking around the edges. The vessel 1 is divided by the membrane 2 into a large section 5 and a small section 6. The large section 5 is provided with two pipelines 7 and 8 for the supply and removal of liquid. The small section 6 is provided with a pipeline 9. In use, liquid under pressure, for example sea water at a pressure of $4MNm^{-2}$, is passed into section 5 of the vessel 1 through pipeline 7 and is withdrawn through pipeline 8. The pressure is sufficient to cause reverse osmosis and some water passes through the membrane 2 into the section 6 from which it is withdrawn through the pipeline 9. The apparatus can be operated at ambient temperature (about 25°C) but higher temperatures may be used. In a continuous process, a further pipeline may be connected to section 6 of the vessel 1 whereby a continuous flow of a carrier liquid, which is the liquid being collected, is passed through section 6. Other modifications and variations may be effected in the manner known to those skilled in the art.

Various aspects of the present invention are illustrated, but not limited, by the following Examples, in which all parts and percentages are by weight unless otherwise indicated.

EXAMPLE 1

A sulphonated polyarylethersulphone copolymer as described in European Patent Publication No 8894, containing 57 mole % of units II and 43 mole % of units III (as defined herein), having a sulphonation ratio of 1:5, and a reduced viscosity (as defined herein) of 0.95 was dissolved, at a temperature of 25°C, in a 3:1:1 parts by weight 1,4-dioxane/acetonitrile/water mixture to give a 26% by weight solution of the copolymer in the solvent mixture. The solution was

filtered through a gauze with a mesh size of 30 micrometres and then centrifuged at 2000 rpm for 20 to 30 minutes.

The solution was cast on to a glass plate and a film of the desired thickness was formed on the plate with the aid of a brass spreader. After 30 seconds evaporation in air, coagulation of the film was effected by immersion for 30 minutes in an aqueous solution of sodium chloride at about -5°C. The glass plate and the membrane formed on it were removed from the sodium chloride solution and the membrane was removed from the glass plate. The membrane was then treated for 30 minutes in an aqueous solution containing 33% by weight of sodium nitrate at 124°C. The solution was then allowed to cool gradually, the membrane was washed with distilled water until no sodium nitrate could be detected in the washings and the membrane was stored in distilled water until tested.

The recovered membrane was tested using an apparatus of the type hereinbefore described and in which the membrane was placed in contact with a porous support and the exposed side, being the side exposed to the air during casting, was subjected to continuous feed of an aqueous solution of sodium chloride (0.2% by weight) pumped across the surface of the membrane at a pressure of about $4MNm^{-2}$ and a temperature of 25°C. The liquid passing through the membrane was analysed. The results of three such experiments are given in Table 1.

TABLE 1

| Sample | Film Thickness (mm) | NaCl Conc$^n$ in coagulation bath (wt%) | Flux (a) ($m.day^{-1}$) | S R (b) (%) |
|---|---|---|---|---|
| A | 0.15 | 5 | 0.61 | 89.4 |
| B | 0.15 | 10 | 1.4 | 86.2 |
| C | 0.25 | 5 | 0.30 | 93.5 |

Notes to Table I

(a) Flux is the volume (in $m^3$) of the solution which passes through the membrane (an area of one $m^2$) in one day and is expressed as $m.day^{-1}$.

(b) S R is % salt rejection and is determined by measuring the conductivity of the solution fed to the membrane cell and measuring the conductivity of the solution permeating the membrane, and is given by the relationship

$$\% \text{ salt rejection} = \left(1 - \frac{\text{conductivity of permeate}}{\text{conductivity of feed}}\right) \times 100.$$

Similar results were obtained using 33% by weight solutions of the same sulphonated copolymer and also using 2:1:1, 4:1:1, 2:2:1 and 3:2:1 parts by weight 1,4-dioxane/acetonitrile/water mixtures.

EXAMPLE 2

A sulphonated polyarylethersulphone copolymer as described in European Patent Publication No 8894, containing 33 mole % of units II and 67 mole % of units III, having a sulphonation ratio of 1:10 and a reduced viscosity of 0.82 was dissolved, at a temperature of 25°C in a 4:5:1 parts by weight 1,4-dioxane/acetonitrile/water mixture to give a 26% by weight solution. The solution was filtered and centrifuged as in Example 1.

The solution was cast on to plates to give films of thickness 0.15mm which were then exposed to the air for one minute followed by quenching in a coagulation bath (details given in Table II) at about -5°C. The membranes were recovered, washed, stored and tested as already described. The results of testing are given in Table II, together with results for the same membranes after treatment in a 33% aqueous solution of sodium nitrate at 107°C whilst being held under a pressure of $20kNm^{-2}$ between two porous carbon blocks.

TABLE II

| Sample | Na Cl Conc$^n$ in coagulation bath (wt%) | Untreated (c) | | Heat treated (c) | |
|---|---|---|---|---|---|
| | | S R (b) (%) | Flux ($m\ day^{-1}$) (a) | S R (b) (%) | Flux ($m\ day^{-1}$) (a) |
| D | NIL | 56 | 1.14 | 78 | 0.87 |
| E | 10 | 88 | 0.27 | ND | ND |
| F | 1 | 52 | 0.88 | 91 | 0.55 |

Notes to Table II

(a) and (b) are as defined in Notes to Table I.

(c) Untreated refers to the membrane as prepared, without any post treatment.

Heat treated refers to the membrane resulting after heating under pressure between the carbon blocks.

N.D. indicates that no determination was made

EXAMPLE 3

A 33% by weight solution was prepared of the copolymer used in Example 2 in a 4:5:1 parts by weight 1,4 dioxane/acetonitrile/water mixture. The solution also contained maleic acid in an amount of 6% by weight of the total composition. The maleic acid was included in the mixture as a swelling agent. The membrane was prepared and tested as in Example 1. A further membrane was subjected to heat treatment by immersion in an aqueous solution containing 33% by weight of sodium nitrate at 107°C for a time of 30 minutes and this heat treated membrane was washed and then tested as in Example 1. The results of the testing are set out in Table III.

TABLE III

| Untreated (d) | | Treated (d) | |
|---|---|---|---|
| S R (b) (%) | Flux (m $day^{-1}$) (a) | S R (b) (%) | Flux (m $day^{-1}$) (a) |
| 67 | 0.6 | 90 | 0.15 |

Notes to Table III

(a) and (b) are as defined in Notes to Table I.

(d) Untreated refers to the membrane as prepared, without any post treatment.

Treated refers to the membrane resulting after heating in the sodium nitrate solution.

EXAMPLE 4

A sulphonated polyarylethersulphone copolymer as described in European Patent Publication No 8894, containing 40 mole % of units II and 60 mole % of units III, having a sulphonation ratio of 1:8 and a reduced viscosity of 1.54 was dissolved, at a temperature of 25°C, in a 3:2:2 parts by weight chloroform/methanol/nitromethane mixture to give a 26% by weight solution. The solution was filtered and centrifuged as in Example 1.

A membrane of thickness 0.15 mm was prepared as described in Example 1, casting being effected at a relative humidity of 55% and a temperature of 21°C. The membrane was quenched in distilled water at 0°C but was not subjected to any subsequent heat treatment. The membrane was tested as in Example 1 and the results achieved using membranes obtained with different evaporation times are given in Table IV.

TABLE IV

| Sample | Evaporation Time (secs) | Flux ($m.day^{-1}$) (a) | S R (b) (%) |
|---|---|---|---|
| G | 20 | 0.73 | 74.6 |
| H | 60 | 0.20 | 91.6 |

Notes to Table IV

(a) and (b) are as defined in Notes to Table I.

Claims

1. A solution of a sulphonated polyarylethersulphone in a solvent mixture, wherein the sulphonated polyarylethersulphone has repeating units of the formula I

$$\text{I} \qquad \left[ -\left( Ph - O \right)_n - Ph - SO_2 - \right]$$

and the solvent mixture contains at least three components each of which is a non-solvent or poor solvent for the sulphonated polyarylethersulphone and which are

a) a liquid or a low melting solid containing at least one hydroxylic group and having a delta-H with a value of at least 8;

b) a liquid or a low melting solid having a delta-D with a value of at least 8 and a delta-P with a value of not more than 3 and

c) a liquid or a low melting solid having a delta-P with a value of at least 8.5 and a delta-H with a value of not more than 3;

wherein

Ph represents a phenylene residue wherein at least some of the groups Ph are sulphonated.

n is 1 or 2 and the value of n can differ along the polymer chain; the solvent mixture forms a single liquid phase and none of the components of the solvent mixture reacts or complexes with another of the components of the solvent mixture or with the sulphonated polyarylethersulphone.

2. A solution as claimed in claim 1 in which component (a) of the solvent mixture has a delta-H of at least 8, a delta-D of not more than 8 and a delta-P of at least 6; component (b) of the solvent mixture has a delta-D of at least 8, a delta-P of not more than 3 and a delta-H of not more than 4; and component (c) of the solvent mixture has a delta-P of at least 8.5 a delta-H of not more than 3 and a delta-D of at least 7.5.

3. A solution as claimed in claim 1 or 2 wherein the solvent mixture consists of water, 1,4 -dioxane and acetonitrile or consists of methanol, chloroform and nitromethane.

4. A solution as claimed in claim 3 wherein the solvent mixture consists of 10 to 25% by weight of water, 10 to 50% by weight of acetonitrile and 25 to 66% by weight of 1,4 -dioxane, the total

amounts of the three components aggregating to 100% by weight.

5. A solution as claimed in any one of claims 1 to 4 wherein at least one component of the solvent mixture is volatile and at least partially evaporates when casting a film from the solution.

6. A solution as claimed in any one of claims 1 to 5 wherein the sulphonated polyarylethersulphone is a material having repeat units of the formula

II $$-\!\left( Ph^1 - O - Ph^2 - O - Ph^1 - SO_2 \right)\!-$$

together with repeat units of the formula

III $$-\!\left( Ph^1 - O - Ph^1 - SO_2 - Ph^1 - O - Ph^1 - SO_2 \right)\!-$$

and optionally units of the formula

IV $$-\!\left( Ph^1 - O - Ph^1 - O - Ph^1 - SO_2 \right)\!-$$

wherein

$Ph^1$ represents a phenylene residue;

$Ph^2$ represents a phenylene residue having one or two groups $-SO_3M$;

M is a hydrogen atom, a metal atom and/or a group $NR_4$, wherein the groups M may be the same or different and the proportion of the groups M is sufficient to combine with the unsatisfied valencies of the group $-SO_3$; and

R is an alkyl group;

7. A solution as claimed in claim 6 wherein the sulphonated polyarylethersulphone is the product of sulphonating a copolymer containing from 5 to 80 mole % of units IV and correspondingly from 95 to 20 mole % of units III and sulphonating to convert at least 90% of the units IV to the units II.

8. A solution as claimed in any one of claims 1 to 7 wherein the sulphonated polyarylethersulphone has a molecular weight which is such that the polymer has a reduced viscosity of at least 0.2 up to 2.5.

9. A method for the production of an asymmetric semi-permeable membrane which method comprises forming a solution of a sulphonated polyarylethersulphone in a solvent mixture, casting the solution on

a support to form a film on the support, immersing, in a coagulation bath, the cast film of the solution on the support and recovering a membrane from the coagulation bath, wherein the solution of the sulphonated polyarylethersulphone in the solvent mixture is as claimed in any one of claims 1 to 8.

10. A method as claimed in claim 9 wherein the supported liquid film is exposed to the atmosphere for a time of from 10 seconds to 5 minutes, before immersing the supported film in the coagulation bath.

11. A method claimed in either claim 9 or claim 10 wherein the coagulation bath contains a non-solvent liquid or liquid mixture or an aqueous solution of a metal salt.

12. A method as claimed in any one of claims 9 to 11 wherein the recovered membrane is heat treated by immersion in an aqueous solution of an inorganic salt at a temperature of from 70°C to 150°C.

13. An asymmetric semi-permeable membrane of thickness 50 up to 250 micrometres whenever obtained by the method of any one of claims 9 to 12.

14. A process for the desalination of sea water or for the purification of brackish waters or industrial effluents by effecting reverse osmosis or ultrafiltration using a membrane as claimed in claim 13 or as obtained by the process of any one of claims 9 to 12.

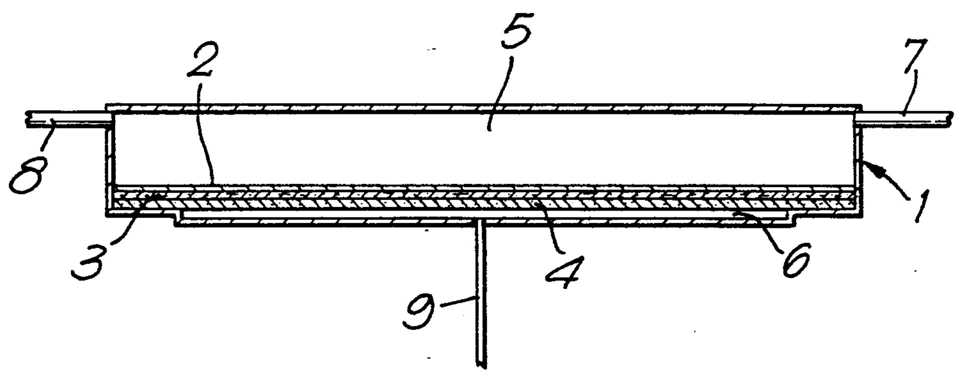
5
2
7
8
1
3
4
6
9